# EUROPÄISCHE PATENTSCHRIFT

(11) **EP 2 243 973 B1**
(45) Veröffentlichungstag und Bekanntmachung des Hinweises auf die Patenterteilung: **21.01.2015**
(21) Anmeldenummer: 09158372.4
(22) Anmeldetag: 21.04.2009
(51) Int. Cl.: F16C 33/58, F16C 33/61

(54) **Wälzlager für Exzentertrieb**
Roller bearing for eccentric drive
Palier à roulement pour un entraînement excentrique

(43) Veröffentlichungstag der Anmeldung: 27.10.2010
(73) Patentinhaber: Groz-Beckert KG, 72458 Albstadt (DE)
(72) Erfinder: Bruske, Johannes, 72458 Albstadt (DE); Durst, Frank, 72459 Albstadt (DE)
(74) Vertreter: Rüger, Barthelt & Abel

(56) Entgegenhaltungen:
- WO-A1-2006/122642
- DE-A1- 19 830 890
- FR-A1- 2 861 441
- FR-A1- 2 897 126

## Beschreibung

Die vorliegende Erfindung betrifft ein Wälzlager für einen Exzentertrieb, wie er als Schaftantrieb für Webmaschinenschäfte Verwendung findet.

Zur Fachbildung sind an Webmaschinen in der Regel mehrere Webschäfte vorgesehen, die jeweils eine Vielzahl parallel zueinander angeordneter Litzen aufweisen, durch deren Fadenaugen die Kettfäden geführt sind. Die Webschäfte werden sehr schnell auf- und abwärts bewegt, so dass die zwischenzeitlich eingeführten Schussfäden abwechselnd oberhalb und unterhalb eines Kettfadens verlaufen.

Um die Webschäfte in eine schnelle Auf- und Abbewegung zu versetzen, werden Schaftantriebe verwendet, die Exzenter verwenden können, um eine Drehbewegung eines Motors in die gewünschte Linearbewegung umzuwandeln. Exzentertriebe ermöglichen hohe Arbeitsgeschwindigkeiten der Webmaschinen.

Die Exzentertriebe welche vorbenannte Exzenter umfassen weisen typischerweise einen flachen Aufbau auf und enthalten mehrere gegeneinander drehbare Elemente, die durch Wälzlager miteinander verbunden sind. Dabei sind die Wälzlager nicht konzentrisch angeordnet, so dass eine Drehbewegung eines exzentrisch angeordneten Elementes über ein Pleuel in eine Schwingung umgewandelt werden kann.

DE 103 31 150 B4 beschreibt ein zweireihiges Kugellager sowie ein einreihiges Kugellager mit Vierpunktlagerung. Die Lager sind zwischen zwei Führungsteilen so ausgebildet, dass im Innen- oder Außenring Nuten angeordnet sind. In den Nuten befinden sich Futterringe aus Elastomer, die jeweils einen Laufring aufnehmen, dessen Oberfläche eine Laufbahn für die Wälzkörper bildet. Der jeweils andere Lagerring weist keine Laufdrähte auf, sondern Laufflächen, die direkt an der Oberfläche des entsprechenden Führungsteils ausgebildet sind. Dies erfordert z.B. eine Wärmebehandlung des gesamten Bauteils und Superfinishing der Laufflächen, um eine ausreichende Lebensdauer zu erzielen.

DE 10 2007 007 998 A1 zeigt ein Wälzlager, bei dem beide Laufbahnen durch einen Profildraht gebildet sind. Die Nuten zur Aufnahme der Profildrähte im Innen- und Außenring sind zunächst in Axialrichtung nach einer Seite hin offen. Nach dem Einsetzen der Profildrähte, der Wälzkörper und des Käfigs kann durch einen Umformvorgang, wie etwa Bördeln, aus einem in Axialrichtung verlaufenden Vorsprung zur Fertigstellung des Lagers die fehlende Nutwand geschaffen werden.

FR 2 897 126 A1 offenbart ein Wälzlager für ein Lenksäule, das in einem Ringraum zwischen zwei zylindrischen, konzentrisch angeordneten und drehbar zueinander gelagerten Elementen angeordnet ist. Während der Innenring aus Vollmaterial mit einer Nut zum Abwälzen der Kugeln ausgebildet ist, besteht der Außenring aus einer Umhüllung, in der zwei Laufringe aus Wälzlagerdraht aufgenommen sind. Einer der Laufringe ist durch ein in Axialrichtung elastisches Ringelement zu dem anderen Laufring hin vorgespannt, um das Lager spielfrei zu halten.

FR 2 861 441 A1 zeigt ein ähnliches Wälzlager ebenfalls für eine Lenksäule, bei dem die axiale Vorspannung des einen Laufrings aus Wälzlagerdraht durch ein in Radialrichtung vorgespanntes Federelement aufgebracht wird. Die Umlenkung der Vorspannkraft von der Radial- in die Axialrichtung erfolgt durch die Neigung der Oberflächen am Berührpunkt bezogen auf die Längsachse.

WO 2006/122642 A1 offenbart ein Taumelscheibengetriebe für Axialkolbenpumpen mit einem ersten zwischen einer Taumelscheibe und einem Taumelkörper sowie einem zweiten zwischen dem Taumelkörper und dem Pumpengehäuse angeordneten Kugellager, die jeweils Laufringe aus Wälzlagerdraht aufweisen. Während das erste Lager eine Vierpunktlagerung mit zwei Wälzlagerdrähten in jedem Laufring schafft, ist das zweite Lager ein Schrägkugellager mit einzelnen Wälzlagerdrähten.

Ausgehend vom Stand der Technik ist es Aufgabe der Erfindung, ein Wälzlager zu schaffen, das eine kostengünstige, hochwertige Lagerung auch bei einem kleinen Lagerdurchmesser ermöglicht. Diese Aufgabe wird mit einem Wälzlager mit den Merkmalen des Anspruchs 1 gelöst.

Das erfindungsgemäße Wälzlager lagert ein inneres und ein äußeres Führungsteil zueinander drehbar. Die beiden Führungsteile können zu einem Exzentertrieb gehören, der in einem Schaftantrieb einer Webmaschine verwendet wird. Zur drehbaren Lagerung sind in einem Zwischenraum zwischen dem inneren und dem äußeren Führungsteil eine Anzahl von Wälzkörpern, vorzugsweise Kugeln angeordnet. Diese wälzen sich an einer inneren Laufbahn des inneren Führungsteils und einer äußeren Laufbahn des äußeren Führungsteils ab. Erfindungsgemäß ist das Lager als ein Hybridlager ausgebildet, dessen innere Laufbahn an einem inneren Laufring aus Vollmaterial ausgebildet ist, der mit dem inneren Führungsteil verbunden ist, während die äußere Laufbahn an einem äußeren Laufring aus einem Wälzlagerdraht ausgebildet ist.

Die vorliegende Erfindung schafft die Möglichkeit, Wälzlager mit einem kleinen Durchmesser der Innenlaufbahn auf einfache Art herzustellen.

Es hat sich herausgestellt, dass Wälzlagerdraht zwar bei der Herstellung von Lagern flexibel einsetzbar ist und auch den Austausch abgenutzter Laufflächen vereinfacht, seiner Verwendung bei der Bildung der Laufbahnen jedoch enge Grenzen gesetzt sind. Der Draht muss einerseits eine ausreichende Festigkeit und Dicke aufweisen, um die von den Wälzkörpern lokal ausgeübten Druckkräfte aufzunehmen und zu verteilen, und sich andererseits ohne Verschlechterung seiner Materialeigenschaften und insbesondere der Qualität der Lauffläche auf den gewünschten Laufringdurchmesser biegen lassen. Vor allem bei kleinen Durchmessern besteht die Gefahr, dass beim Biegen keine gleichmäßig gekrümmten und ansonsten ebenen Lauffläche mit hoher Belastbarkeit geschaffen werden.

Die vorliegende Erfindung verwendet daher einen inneren Laufring aus Vollmaterial, der eine Lauffläche mit dem gewünschten Durchmesser aufweist und an dem inneren Führungsteil angebracht wird. Als äußerer Laufring wird hingegen Wälzlagerdraht verwendet, der zu einem Kreisring gebogen ist und in eine umlaufende Nut in dem äußeren Führungsteil eingesetzt sein kann. Der Wälzlagerdraht kann durch einen Futterring mit dem äußeren Führungsteil verbunden sein. Auch die äußere Laufbahn weist vorzugsweise eine gehärtete Oberfläche auf.

In einer vorteilhaften Ausführungsform ist der Außendurchmesser der inneren Laufbahn an dem inneren Laufring kleiner als 90 mm, wohingegen der Innendurchmesser der äußeren Laufbahn an dem Wälzlagerdraht größer oder gleich 90 mm ist. Auf diese Weise ist es möglich, den Lagerdurchmesser zu verkleinern und den Außenring weiterhin aus Wälzlagerdraht herzustellen, während nur der Innenring aus dem Vollmaterial ausgebildet ist.

Abgesehen von der Differenz der Durchmesser von innerer und äußerer Laufbahn bietet das erfindungsgemäße Wälzlager weiterhin den Vorteil, dass an dem aus Wälzlagerdraht gebogenen äußeren Laufring nur die Innenoberfläche als Lauffläche geeignet sein muss. Diese entsteht bei der Biegung des Wälzlagerdraht im Wesentlichen durch tangentiale Druckkräfte und bildet eine Stauchungszone, in der die Gefahr eine Rissbildung relativ gering ist. Die spätere Belastbarkeit durch radiale Druckkräfte von den Wälzkörpern wird dadurch nicht wesentlich beeinträchtigt. Dem gegenüber befände sich eine Lauffläche in der Außenoberfläche eines inneren Laufrings in einer durch tangentiale Zugkräfte stark gedehnten Zone, wenn ein Wälzlagerdraht zu einem inneren Laufring mit kleinem Radius gebogen würde. Die Belastbarkeit dieser Lauffläche würde dadurch deutlich verringert, weswegen ein vorgefertigter innerer Laufring aus einem Vollmaterial verwendet wird.

Der Einsatz eines erfindungsgemäßen Wälzlagers ist in einem Exzentertrieb besonders vorteilhaft, wie er etwa als Schaftantrieb in Webmaschinen zum Einsatz kommt. Von beispielsweise zwei in einer Ebene exzentrisch zueinander angeordneten Wälzlagern, kann in vorteilhafter Weise z.B. das innere Wälzlager mit den Merkmalen der vorliegenden Erfindung aufgebaut sein und einen Innenring aus Vollmaterial und einen Außenring aus Wälzlagerdraht enthalten. Das äußere Wälzlager kann aufgrund seiner erheblich größeren und damit für die Verwendung von Wälzlagerdraht unbedenklichen Ringdurchmesser zwei aus Wälzlagerdraht aufgebaute Laufringe enthalten.

Das erfindungsgemäße Wälzlager kann ferner in vorteilhafter Weise aus vorgefertigten Elementen vormontiert werden. Dazu gehören der äußere Laufring aus einem ringförmig gebogenen Wälzlagerdraht in einer Nut an dem äußeren Führungsteil sowie der innere Laufring aus einem Vollmaterial, wie etwa gehärtetem Stahl. Die Kugeln werden zwischen den beiden Laufringen eingefüllt und wahlweise in einem Käfig angeordnet. Das fertig vormontierte Lager ist zunächst nur mit dem äußeren Führungsteil verbunden. Der innere Laufring braucht daher erst bei der Endmontage mit dem inneren Führungsteil verbunden zu werden. Ein Einfüllen der Kugeln bei der Endmontage braucht daher nicht vorgesehen zu sein, so dass z.B. auf eine entsprechende Lagerspieleinstellung oder eine Einfüllnut für die Kugeln verzichtet werden kann.

Die Einzelheiten weiterer vorteilhafter Ausführungsformen der Erfindung sind Gegenstand der Ausführungsbeispiele, die in den Zeichnungen veranschaulicht sind:
Fig. 1 zeigt einen Webschaft mit Schaftantrieb in einer schematisierten Darstellung;
Fig. 2 zeigt einen Exzentertrieb mit einem erfindungsgemäßen Wälzlager zum Antrieb des in Fig. 1 gezeigten Webschaftes;
Fig. 3 zeigt eine Schnittansicht des inneren Wälzlagers in Fig. 2.

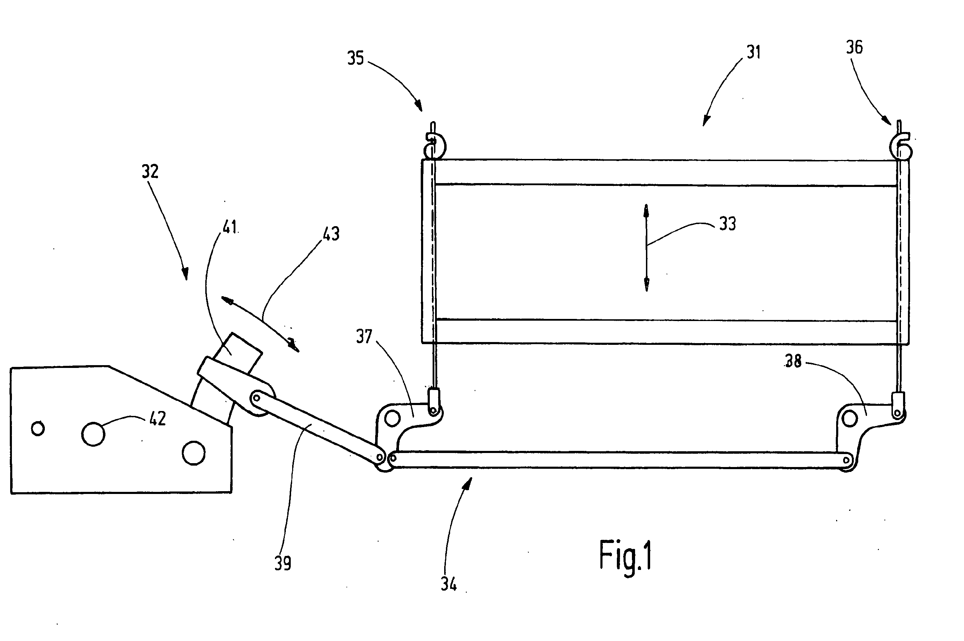

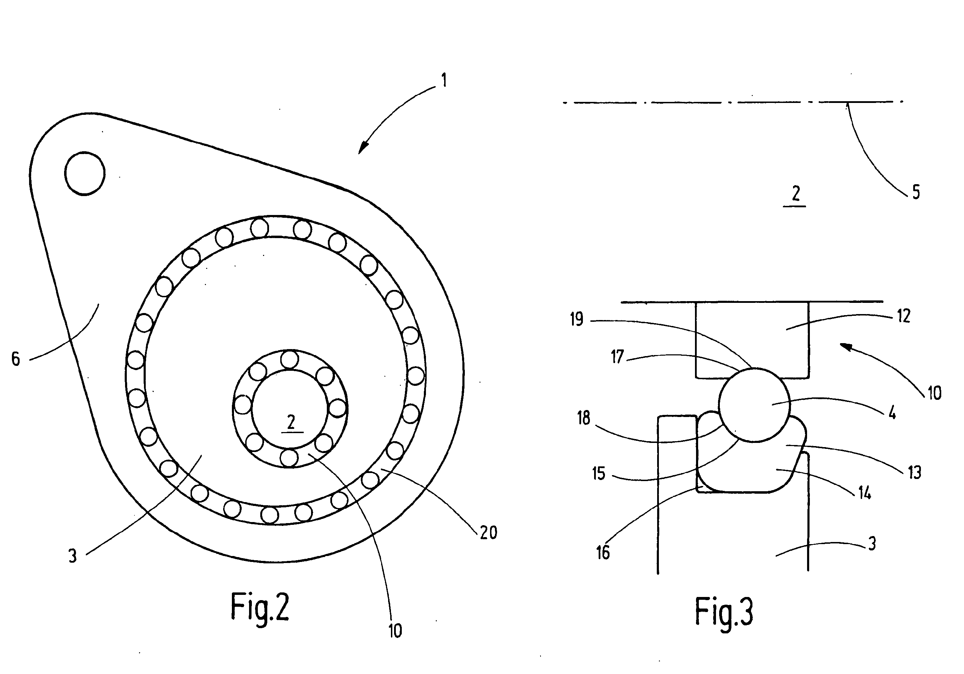

Fig. 1 zeigt einen Webschaft 31 mit einem zugehörigen Schaftantrieb 32. Der Webschaft 31 kann durch ein Gestänge 34 mit Winkelhebeln 37, 38 angetrieben werden, die die Bewegungen einer Zug- und Druckstange 39 in eine Auf- und Abbewegung umsetzen, wie sie der Pfeil 33 zeigt, und an zwei oder mehr Stellen 35, 36 auf den Webschaft 31 übertragen. Die Stange 39 wird über eine Schwinge 41, die eine Schwenkbewegung gemäß dem Pfeil 43 ausführt, von dem Schaftantrieb 32 angetrieben. Der Schaftantrieb 32 erzeugt die Schwenkbewegung aus der Drehbewegung einer Eingangswelle 42 mit Hilfe eines in Fig. 2 gezeigten Exzentertriebs.

Fig. 2 zeigt einen Exzentertrieb 1, wie er zum Antrieb des in Fig. 1 dargestellten Webschaftes 31 verwendet werden kann. Der Exzentertrieb 1 enthält ein erstes inneres Wälzlager 10 und ein zweites äußeres Wälzlager 20, die flach in einer Ebene exzentrisch angeordnet sind. Im vorliegenden Beispiel kann z.B. ein inneres Führungsteil 2 starr mit feststehenden Teilen der Webmaschine, wie etwa dem Gehäuse verbunden sein. Ein äußeres Führungsteil 3 kann drehbar um das innere Führungsteil 2 gelagert und mit der Eingangswelle 42 verbunden sein, so dass es sich in seiner exzentrischen Anordnung um das innere Führungsteil dreht. Ein Pleuelelement 6 kann drehbar an dem äußeren Führungsteil 3 gelagert und schwenkbar z.B. mit der Schwinge 41 verbunden sein, um eine Drehbewegung der Welle 42 in eine Schwenkbewegung der Schwinge 41 umzuwandeln. Der Exzentertrieb könnte jedoch auch einen anderen Aufbau aufweisen, der eine geeignete Umwandlung einer Dreh- in eine Schwenkbewegung ermöglicht.

Während das äußere Wälzlager 20 vorzugsweise zwei (nicht dargestellte) Laufringe aufweist, die beide einen Wälzlagerdraht als Lauffläche verwenden, ist bei dem inneren Wälzlager 10 gemäß der vorliegenden Erfindung nur der äußere Laufring mit Wälzlagerdraht als Lauffläche ausgebildet, während die innere Lauffläche von einem Laufring vorzugsweise aus gehärtetem Stahl gebildet wird. Das innere Wälzlager ist in Fig. 3 in einer Schnittansicht genauer dargestellt.

Fig. 3 zeigt in einer Schnittansicht das innere Wälzlager aus Fig. 2. Das Lager ist zwischen einem inneren Führungsteil 2 und einem äußeren Führungsteil 3 angeordnet, die es um eine Achse 5 drehbar miteinander verbindet. Als Wälzkörper dienen eine Anzahl um den Umfang des Lagers herum angeordnete Lagerkugeln 4. Die innere Laufbahn 17, auf der sich die Kugeln 4 abwälzen, wird von der Außenoberfläche eines inneren Laufrings 12 gebildet, der aus einem Vollmaterial, vorzugsweise gehärtetem Stahl besteht. Die Laufbahn 17 weist eine umlaufende Nut 19 zum Abwälzen der Kugeln 4 auf. Der innere Laufring 12 weist einen Außendurchmesser der zu klein ist, um ihn mit den zur Zeit bekannten Fertigungsmethoden zuverlässig aus einem gebogenen Wälzlagerdraht geeigneter Stärke herzustellen. Es bestünde vielmehr die Gefahr von unerwünschten Verformungen des Wälzlagerdrahtes und dadurch eines ungleichmäßigen Verlaufs der Lauffläche oder Rissbildung infolge der engen Biegung. Der Lauf der Kugeln im Lager würde beeinträchtigt, und erhöhte Reibung und ein beschleunigter Verschleiß könnten die Folge sein. Beispielsweise weist der innere Laufring 12 einen Außendurchmesser von weniger als 90 mm auf, vorzugsweise etwa 80 mm.

Der äußere Laufring 13 ist aus einem Wälzlagerdraht 14 aufgebaut und weist einen Innendurchmesser von 90 mm oder mehr auf, der sich mit den bekannten Verfahren so herstellen lässt, dass ein störungsfreier Lauf der Kugeln 4 ermöglicht wird. Der Wälzlagerdraht 14 weist ein Profil mit einer Nut 15 zum Abwälzen der Kugeln 4 auf. Diese Nut 15 bildet die äußere Laufbahn 18 des Wälzlagers 10. Der Wälzlagerdraht 14 ist zu einem Kreisring gebogen und kann in eine umlaufende Nut 16 eingesetzt sein, die in dem äußeren Führungsteil 3 ausgebildet ist. In der Nut 16 könnte zusätzlich ein elastischer Futterring angeordnet sein, der z.B. aus Elastomer besteht, außen um den Wälzlagerdraht herum verläuft und diesen in der Nut 16 mit dem äußeren Führungsteil 3 verbindet.

Der äußere Laufring 13 weist an einer Stelle seines Umfangs eine (nicht dargestellte) Stoßstelle auf, an der die beiden Enden des gebogenen Wälzlagerdrahtes 14 einander zugewandt sind und sich berühren können, um einen geschlitzten, geschlossenen Ring zu bilden. Zum Zwecke eines leichteren Kugelübergangs können die Enden schräg verlaufende Stirnflächen aufweisen. Außerdem kann die Stoßstelle so angeordnet sein, dass sie nicht in oder nahe bei der Ebene liegt, die die Achsen der beiden Wälzlager 10, 20 des Exzentertriebs 1 aufspannen. Dadurch wird verhindert, dass die Stoßstelle mit den bei der Bewegungsrichtungsumkehr auftretenden erhöhten Beschleunigungskräften belastet wird. Bevorzugt ist sie weit außerhalb dieser Ebene, z.B. um etwa 90° versetzt zu dieser angeordnet. Die Gestaltung der Stirnflächen und ihre Ausrichtung im Raum sowie die Lage der Stoßstelle könnten jedoch auch anders gewählt werden.

Ein Wälzlager 10 in einem Exzentertrieb 1 zum Antrieb eines Webschaftes 31 einer Webmaschine weist eine innere Laufbahn 17 auf, die von einem inneren Laufring 12 aus einem Vollmaterial gebildet wird, der mit einem inneren Führungsteil 2 verbunden ist. Die äußere Laufbahn 18 wird von einem Wälzlagerdraht 14 gebildet, der zu einem Kreisring 13 gebogen und in einem äußeren Führungsteil 3 aufgenommen ist. Das Wälzlager 10 ermöglicht einen einfachen Aufbau und eine zuverlässige Funktion auch bei kleinen Durchmessern der inneren Laufbahn 17, die mit einem Wälzlagerdraht aufgrund der erforderlichen Biegung nicht mehr realisierbar sind.

### Bezugszeichenliste

- 1: Exzentertrieb
- 2: Inneres Führungsteil
- 3: Äußeres Führungsteil
- 4: Kugel
- 5: Achse
- 6: Pleuelelement
- 10: Inneres Wälzlager
- 12: Innerer Laufring
- 13: Äußerer Laufring
- 14: Wälzlagerdraht
- 15: Nut
- 16: Nut
- 17: Innere Laufbahn
- 18: Äußere Laufbahn
- 19: Nut
- 20: Äußeres Wälzlager
- 31: Webschaft
- 32: Schaftantrieb
- 33: Pfeil
- 34: Gestänge
- 35: Stelle
- 36: Stelle
- 37: Winkelhebel
- 38: Winkelhebel
- 39: Zug- und Druckstange
- 41: Schwinge
- 42: Eingangswelle
- 43: Pfeil

## Patentansprüche

1. Anordnung aufweisend ein inneres Führungsteil (2), ein äußeres Führungsteil (3) und ein Wälzlager (10) zur zueinander drehbaren Lagerung des inneren Führungsteils (2) und des äußeren Führungsteils (3),
mit mehreren Wälzkörpern (4), die sich an einer inneren Laufbahn (17) des inneren Führungsteils (2) und einer äußeren Laufbahn (18) des äußeren Führungsteils (3) abwälzen, wobei die innere Laufbahn (17) an einem inneren Laufring (12) ausgebildet ist, der nicht aus gebogenem Wälzlagerdraht sondern aus Vollmaterial besteht und der mit dem inneren Führungsteil (2) verbunden ist,
**dadurch gekennzeichnet, dass** die äußere Laufbahn (18) an einem äußeren Laufring (13) aus einem einzelnen Wälzlagerdraht (14) mit einem eine Nut aufweisenden Profil ausgebildet ist und wobei der Wälzlagerdraht (14) zu einem Kreisring gebogen und in dem äußeren Führungsteil (3) aufgenommen ist.

2. Anordnung nach Anspruch 1, bei dem die innere und/oder äußere Laufbahn (17, 18) gehärtet ist.

3. Anordnung nach einem der Ansprüche 1 oder 2, bei dem der Außendurchmesser der inneren Laufbahn (17) kleiner als 90 mm ist.

4. Anordnung nach einem der Ansprüche 1 bis 3, bei dem der Innendurchmesser der äußeren Laufbahn (18) größer oder gleich 90 mm ist.

5. Anordnung nach einem der Ansprüche 1 bis 4, bei dem die Wälzkörper Kugeln (4) sind.

6. Exzentertrieb (1) mit einer ein erstes Wälzlager (10) aufweisenden Anordnung nach einem der Ansprüche 1 bis 5 sowie einem zweiten Wälzlager (20), wobei das zweite Wälzlager (10) exzentrisch um das erste Wälzlager (20) angeordnet ist.

## Claims

1. Arrangement having an inner guide part (2), an outer guide part (3) and a rolling bearing (10) for the relatively rotatable mounting of the inner guide part (2) and the outer guide part (3),
with multiple roll bodies (4), which roll on an inner running path (17) of the inner guide part (2) and an outer running path (18) of the outer guide part (3), wherein the inner running path (17) is configured on an inner race (12), which is not made from bent rolling bearing wire but from solid material and which is connected to the inner guide part (2),
**characterised in that** the outer running path (18) is configured on an outer race (13) made from a single rolling bearing wire (14) with a profile having a groove, and wherein the rolling bearing wire (14) is bent to form a circular ring and is received in the outer guide part (3).

2. Arrangement according to claim 1, in which the inner and/or outer running path (17, 18) is hardened.

3. Arrangement according to one of claims 1 or 2, in which the outside diameter of the inner running path (17) is smaller than 90 mm.

4. Arrangement according to one of claims 1 to 3, in which the inside diameter of the outer running path (18) is larger than or equal to 90 mm.

5. Arrangement according to one of claims 1 to 4, in which the roll bodies arc balls (4).

6. Eccentric drive (1) with an arrangement having a first rolling bearing (10) according to one of claims 1 to 5 and also a second rolling bearing (20), wherein the second rolling bearing (10) is arranged eccentrically around the first rolling bearing (20).

## Revendications

1. Agencement présentant une partie de guidage intérieure (2), une partie de guidage extérieure (3) et un palier à roulement (10) pour monter la partie de guidage intérieure (2) et la partie de guidage extérieure (3) de façon qu'elles puissent tourner l'une par rapport à l'autre,
comprenant plusieurs corps roulants (4), qui roulent sur une piste de roulement intérieure (17) de la partie de guidage intérieure (2), et une piste de roulement extérieure (18) de la partie de guidage extérieure (3), la piste de roulement intérieure (17) étant formée sur une bague de roulement intérieure (12) qui n'est pas constituée de fil de palier à roulement plié, mais d'un matériau plein, et qui est reliée à la partie de guidage intérieure (2),
**caractérisé en ce que** la piste de roulement extérieure (18) formée sur une bague de roulement extérieure (13) est constituée d'un seul fil de palier à roulement (14) doté d'un profil présentant une rainure, et le fil de palier à roulement (14) étant plié en un anneau de cercle et reçu dans la partie de guidage extérieure (3).

2. Agencement selon la revendication 1, dans lequel la piste de roulement intérieure et/ou extérieure (17, 18) est trempée.

3. Agencement selon l'une des revendications 1 ou 2, dans lequel le diamètre extérieur de la piste de roulement intérieure (17) est inférieur à 90 mm.

4. Agencement selon l'une des revendications 1 à 3, dans lequel le diamètre intérieur de la piste de roulement extérieure (18) est supérieur ou égal à 90 mm.

5. Agencement selon l'une des revendications 1 à 4, dans lequel les corps roulants sont des billes (4).

6. Entraînement excentrique (1) comprenant un agencement selon l'une des revendications 1 à 5 présentant un premier palier à roulement (10) et comprenant un deuxième palier à roulement (20), le deuxième palier à roulement (10) étant disposé excentriquement autour du premier palier à roulement (20).
